# EUROPÄISCHE PATENTSCHRIFT

(11) **EP 3 322 286 B1**
(45) Veröffentlichungstag und Bekanntmachung des Hinweises auf die Patenterteilung: **05.05.2021**
(21) Anmeldenummer: 16750608.8
(22) Anmeldetag: 08.07.2016
(51) Int. Cl.: A01K 87/04, A01K 97/00

(54) **ANGELSCHNUREINFÄDELHILFE ZUM EINFÄDELN EINER ANGELSCHNUR IN DIE RUTENRINGE EINER ANGELRUTE**
FISHING-LINE THREADING AID FOR THREADING A FISHING LINE INTO THE LINE GUIDES OF A FISHING ROD
AIDE À L'ENFILEMENT D'UNE LIGNE DE PÊCHE, DESTINÉ À L'ENFILEMENT D'UNE LIGNE DE PÊCHE DANS LES ANNEAUX D'UNE CANNE À PÊCHE

(30) Priorität: 15.07.2015 DE 102015008961
(43) Veröffentlichungstag der Anmeldung: 23.05.2018
(73) Patentinhaber: Aurich, Mario, 34302 Guxhagen (DE)
(72) Erfinder: Aurich, Mario, 34302 Guxhagen (DE)
(74) Vertreter: Patentanwälte Walther Hinz Bayer PartGmbB
(86) Internationale Anmeldenummer: PCT/DE2016/200312
(87) Internationale Veröffentlichungsnummer: WO 2017/008802

(56) Entgegenhaltungen:
- EP-A2- 0 174 754
- DE-A1- 19 902 199
- GB-A- 2 321 066
- JP-A- 2000 116 286
- JP-A- 2007 330 107

## Beschreibung

Die vorliegende Erfindung betrifft eine Angelschnureinführhilfe zum Einfädeln einer Angelschnur in Rutenringe einer Angelrute gemäß dem Oberbegriff des Anspruches 1.

Beim Angeln mit einer Angelrute kommt es gelegentlich vor, dass eine neue Angelschnur eingeführt werden muss. Dabei muss das freie Ende der Angelschnur durch die an der Rute befestigten Rutenringe hindurchgeführt werden, bevor dieses freie Ende an weiteren Hilfsmitteln angeknotet werden kann. Dieses Einfädeln der Angelschnur in die diversen Rutenringe ist sehr mühsam und erfordert einiges Geschick, insbesondere weil eine solche Angelrute sehr lang sein kann.

Aus der DE 199 02 199 A1 ist eine Vorrichtung zum einfädeln der Angelschnur in Rutenringe der Angelrute bekannt, die einen flachgeformten Halter mit zwei beabstandten Auflageflächen für die Aufnahme einer Metallnadel aufweist. Am hinteren Ende der Metallnadel ist ein Schlitz zur Aufnahme einer Angelschnur aufsgebildet. Dabei ist die Metallnadel im Bereich des Schlitzes und ein Stück weit darüber hinaus dünner ausgeführt als die eigentliche Metallnadel, um in diesem Bereich eine verschiebbare Silikonhülse aufzunehmen. Nachdem die Angelschnur in den Schlitz eingehängt ist, kann die Silikonhülse zum Ende der Metallnadel hin verschoeben werden, um die Angelschnur in dieser Position zu fixieren, das heißt, um ein versehentliches Herausrutschen der Angelschnur zu verhindern. Es versteht sich, dass der Außendurchmesser der Silikonhülse nicht größer als der Außendurchmesser der Metallnadel ist, damit ein einwandfreies Hindurchführen der Metallnadel auch mit Silikonhülse durch die vergleichsweise kleinen Rutenringe der Angelrute problemlos möglich ist.

Aus der EP 0 174 754 A2 ist eine Einfädelvorrichtung bekannt, die ein in einem Gehäuse gehaltenenes sternförmiges Rad umfasst, wobei an jeder Sternspitze eine Aufnahme für ein metallenes Einfädelelement vorgesehen ist, an dem ein Einschnitt zur Aufnahme der Angelschnur ausgebildet ist.

Aus der JP 2007-330107 A ist eine Angelrute bekannt, an der eine Einfädelhilfe angebracht ist, wobei die Einfädelhilfe eine klassische Nadel umfasst, an deren Ende eine hakenförmig ausgebildete offene Hülse ausgebildet ist, in der die Angelschnur einführbar ist.

Davon ausgehend liegt der vorliegenden Erfindung die Aufgabe zugrunde, eine Angelschnureinfädelhilfe der eingangs genannten Art zu schaffen, mit der eine Angelschnur schnell und einfach in die Rutenringe der Angelrute eingefädelt werden kann.

Als technische Lösung dieser Aufgabe wird erfindungsgemäß eine Angelschnureinfädelhilfe der eingangs genannten Art mit den Merkmalen des Anspruches 1 vorgeschlagen. Vorteilhafte Weiterbildungen dieser Angelschnureinfädelhilfe sind den Unteransprüchen zu entnehmen.

Eine nach dieser technischen Lehre ausgebildete Angelschnureinfädelhilfe hat den Vorteil, dass die Angelschnur in einfacher Weise, gegebenenfalls auch nur mit einer Hand, in die Schnurkerbe eingeklemmt werden kann und dass der Angler dann die Angelschnureinführhilfe ergreift, um diese durch die einzelnen Rutenringe zu führen. Das Durchfädeln der Angelschnureinführhilfe durch die Rutenringe ist deutlich einfacher, als das jeweilige Durchfädeln der doch sehr feinen Angelschnur. Nachdem die Angelschnur durch sämtliche Rutenringe hindurchgefädelt ist, kann dann die Angelschnur in einfacher Weise aus der Klemmung in der Schnurkerbe gelöst werden, ohne dass hierfür ein großer Kraftaufwand erforderlich ist.

Nach dem Einklemmen der Angelschnur in die Schnurkerbe kann es vorkommen, dass die Lippe radial nah außen absteht und damit ein Durchführen der Angelschnureinführhilfe durch den Rutenring erschwert. Ist an der Schnurkerbe eine Lippe ausgebildet, die an ihrem freien Ende außen abgeflacht ist, so reduziert sich dieses Problem deutlich.

Erfindungsgemäß hat es sich als günstig erwiesen, diese Schnurkerbe verjüngend auszubilden. Hierdurch besteht die Möglichkeit, Angelschnüre unterschiedlicher Dicke in der Schnurkerbe zu verklemmen.

In einer bevorzugten Ausführungsform ist die Schnurkerbe in axialer Richtung ausgerichtet. Dies hat den Vorteil, dass die Angelschnur beim Hindurchführen der Angelschnureinführhilfe durch die Rutenringe weiter in die Schnurkerbe gezogen wird und somit ein versehentliches Rausrutschen der Angelschnur vermieden wird.

In einer anderen bevorzugten Ausführungsform ist vom Ende der Schnurkebe ausgehend bis zum Ende des Korpus eine Rille zur Aufnahme der Angelschnur ausgebildet. Dies hat den Vorteil, dass die aus der Schnurkerbe herausragende Angelschnur in dieser Rille untergebracht werden kann, ohne dass sich hierdurch der Gesamtdurchmesser der Angelschnureinführhilfe vergrößert. Dies wiederum hat den Vorteil, dass der Durchmesser der Angelschnureinführhilfe dem Durchmesser des kleinsten Rutenringes entsprechen kann, was einerseits die Herstellung der Angelschnureinführhilfe erleichtert und andererseits die Griffigkeit und Handhabbarkeit der Angelschnureinführhilfe verbessert.

In einer weiteren, bevorzugten Ausführungsform ist der Korpus zumindest teilweise der Länge nach gekrümmt ausgebildet. Dies hat den Vorteil, dass hier durch das Einführen der Angelschnureinführhilfe in den Rutenring und das anschließende Herausholen deutlich erleichtert wird, weil die Angelschnureinführhilfe somit der natürlichen Bewegung des Anglers beim Einführen folgt.

In noch einer weiteren, bevorzugten Ausführungsform ist am Korpus eine Rücklaufsperre vorgesehen, wobei die Rücklaufsperre vorzugsweise als ein in den Korpus eingeführter Schlitz ausgebildet ist. Dabei öffnet sich der Schlitz zur Schnurkerbe hin.

Eine Rücklaufsperre hat den Vorteil, dass der Angler den Einfädelvorgang an einem der Rutenringe unterbrechen kann, dabei die Angelschnureinführhilfe mit der Rücklaufsperre an dem entsprechenden Rutenring einhängt und somit Zeit und Gelegenheit hat, sich anderen Dingen zuzuwenden, ohne dass die Angelschnur aus dem bereits eingefädelten Rutenring wieder herausgelangt.

Dabei hat es sich als vorteilhaft erwiesen, dass eine am Schlitz ausgebildete Zunge zumindest teilweise radial vom Korpus abstehen zu lassen und diese Zunge gegebenenfalls als elastisch auszubilden, sodass die Zunge unter Krafteinwirkung vollständig in den Körper einschwenken kann.

Die Ausrichtung des Schlitzes und der damit verbundenen Zunge in axialer Richtung hat weiterhin den Vorteil, dass die Zunge beim Hindurchführen der Angelschnureinführhilfe durch den Rutenring gegen den Korpus der Angelschnureinführhilfe gedrückt wird und somit kein Hindernis darstellt. Aufgrund der dem Material innewohnenden Speichereigenschaft springt die Zunge nach Verlassen des Rutenringes radial ab und aktiviert damit die Rücklaufsperre für den Fall, dass der Angler die Angelschnureinführhilfe loslässt und sichert die Angelschnureinführhilfe gegen unbeabsichtigtes Ausrutschen aus dem Rutenring.

In noch einer anderen Ausführungsform hat es sich als vorteilhaft erwiesen, die Angelschnureinführhilfe aus fluoreszierndem Material zu fertigen, damit auch bei schlechten Lichtverhältnissen, z. B. während der Dämmerung oder in der Nacht, die Angelschnur mittels der Angelschnureinführhilfe durch die Rutenringe geführt werden kann.

Weitere Vorteile der erfindungsgemäßen Angelschnureinfädelhilfe ergeben sich aus der beigefügten Zeichnung und den nachstehend beschriebenen Ausführungsformen. Die erwähnten Ausführungsformen sind nicht als abschließende Aufzählung zu verstehen, sondern haben vielmehr beispielhaften Charakter. Es zeigen:
- Fig. 1: eine Draufsicht auf eine erste Ausführungsform einer erfindungsgemäßen Angelschnureinfädelhilfe mit eingefädelter Angelschnur;
- Fig. 2: eine Seitenansicht der Angelschnureinfädelhilfe gemäß Fig. 1;
- Fig. 3: eine Frontansicht der Angelschnureinfädelhilfe gemäß Fig. 1;
- Fig. 4: eine Draufsicht auf eine zweite Ausführungsform einer erfindungsgemäßen Angelschnureinfädelhilfe;
- Fig. 5: eine Seitenansicht der Angelschnureinfädelhilfe gemäß Fig. 4;
- Fig. 6: eine Seitenansicht auf eine dritte Ausführungsform einer erfindungsgemäßen Angelschnureinfädelhilfe;
- Fig. 7: eine Seitenansicht auf eine vierte Ausführungsform einer erfindungsgemäßen Angelschnureinfädelhilfe.

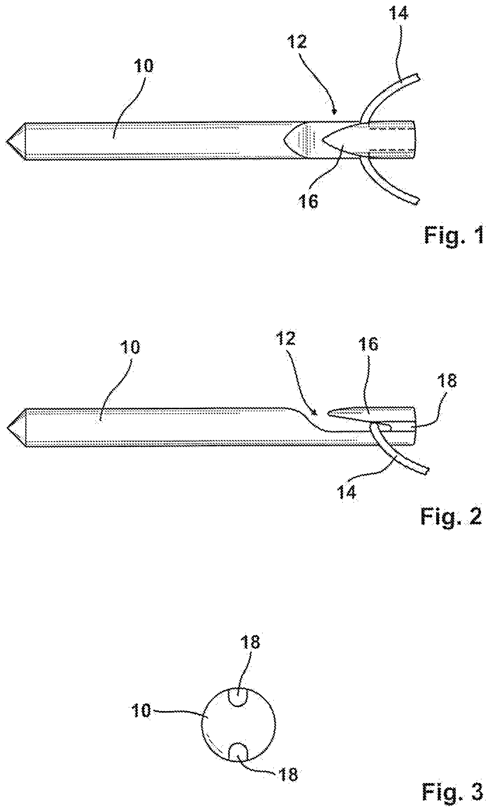

In den Figuren 1 bis 3 ist eine erste Ausführungsform der erfindungsgemäßen Angelschnureinführhilfe abgebildet. Diese umfasst einen Korpus 10 und eine am Korpus ausgebildete Schnurkerbe 12, in der eine Angelschnur 14 klemmend gehalten werden kann. Die Schnurkerbe 12 ist in axialer Richtung des Korpus 10 ausgerichtet und umfasst eine Lippe 16, die an ihrem freien Ende außen abgeflacht ausgebildet ist.

Die Schnurkerbe 12 ist sich verjüngend ausgebildet, um Angelschnüre 14 unterschiedlicher Dicke klemmend aufnehmen zu können. Auf beiden Seiten der Schnurkerbe 12 ist ausgehend von einem Ende der Schnurkerbe 12 bis hin zum Ende des Korpus 10 jeweils eine Rille 18 zur Aufnahme der Angelschnur 14 ausgebildet.

Die in den Figuren 1 bis 3 ausgebildete Einführhilfe ist aus einem elastischen, aber formstabilen Kunststoff gebildet und in einer fluoreszierenden Farbe gehalten.

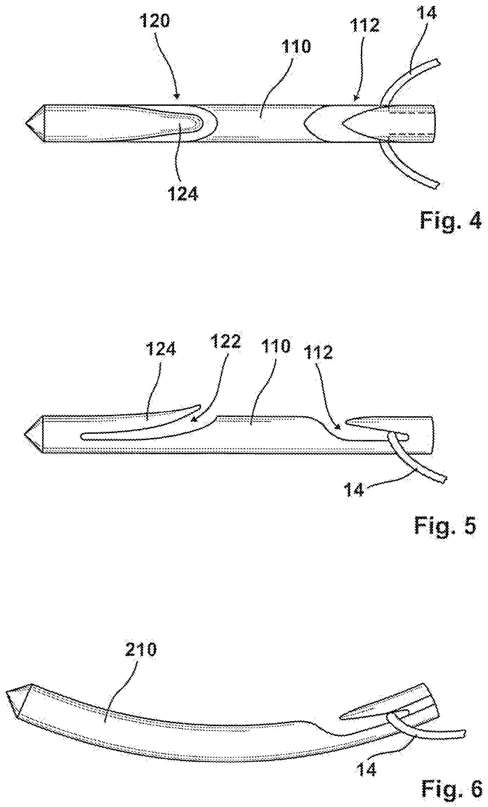

In den Figuren 4 und 5 ist eine zweite Ausführungsform einer erfindungsgemäßen Angelschnureinführhilfe abgebildet, die identisch mit der in den Figuren 1 bis 3 beschriebenen Angelschnureinführhilfe ausgebildet ist, zusätzlich jedoch noch eine Rücklaufsperre 120 aufweist. Diese Rücklaufsperre 120 ist als ein im Korpus 110 eingelassener Schlitz 122 ausgebildet, welcher in axialer Richtung ausgerichtet ist und sich zur Schnurkerbe 112 hin öffnet. Die Rücklaufsperre 120 umfasst auch eine radial etwas abstehende Zunge 124, welche elastisch ausgestaltet ist. Mit dieser Zunge 124 bleibt die Angelschnureinführhilfe bei einer Rückwärtsbewegung am Angelrutenring hängen und verhindert somit das unbeabsichtigte Zurückgleiten der Angelschnur aus dem bereits eingefädelten Rutenring.

In Fig. 6 ist eine dritte Ausführunsform einer erfindungsgemäßen Angelschnureinführhilfe gezeigt, welche analog zur ersten, in den Figuren 1 bis 3 gezeigten Ausführugnsform ausgstaltet ist. Der einzige Unterschied besteht darin das hier der Korpus 210 entlang der Längsachse gekrümmt ausgebildet ist. Hierdurch wird der natürlichen Handbewegung beim Hindurchführen der Angelschnureinführhilfe durch einen Rutenring Rechnung getragen, sodass das Einführen weiter erleichtert wird.

In einer hier nicht dargestellten Ausführungsform, ist die Angelschnureinführhlfe analog zur zweiten Ausführungsform ausgebildet und darüber hinaus ebenfalls entlang der Längsachse gekrümmt ausgebildet.

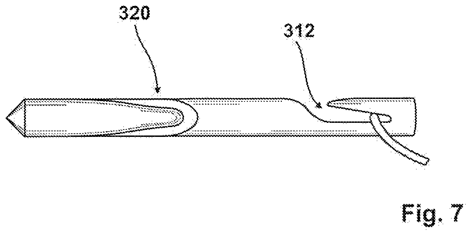

In Fig. 7 ist eine vierte Ausführungsform dargestellt, welche analog zur in den Fig. 4 und 5 gezeigten zweiten Ausführungsform ausgebildet ist, wobei jedoch die Rücklaufsperrre 320 gegenüber der Schnurkerbe 312 um 90° gedreht angeordnet ist.

In einer anderen, hier nicht dargestellten Ausführungsform ist die Rücklaufsperre gegenüber der Schnurkerbe um 120° oder um 180° gedreht angeordnet.

Die hier beschriebene Angelschnureinführhilfe wird wie folgt verwendet:
Zunächst einmal ergreift der Angler ein Ende der Angelschnur 14 und führt die Angelschnur 14 nahe diesem Ende so tief in die sich verjüngende Schnurkerbe 12, 112, bis die Angelschnur 14 dort klemmend gehalten ist. Anschließend ergreift der Angler den im Wesentlichen zylindrischen Korpus 10, 110, 210 der Angelschnureinführhilfe und schiebt diesen durch den untersten Rutenring, dann durch den nächsten Rutenring usw.

Damit die Angelschnureinführhilfe sich nicht mit seiner Schnurkerbe 12, 112 an einen Rutenring verhakt, ist die Lippe 16 der Schnurkerbe 12, 112 an ihrem freien Ende abgeflacht ausgebildet. Diese Abflachung erfolgt idealerweise so weit, dass kein Teil der Lippe 16 radial über den Korpus übersteht.

Beim Hindurchfädeln der Angelschnureinführhilfe durch den Rutenring, insbesondere, wenn die Rutenringe sehr klein sind, wird die Angelschnur 14 in die rechts und links am Korpus vorgesehenen Rillen 18 hineingedrückt, sodass die Angelschnur 14 keine Verdickung des Korpus 10, 110, 210 bildet. Dies hat den Vorteil, dass die Angelschnureinführhilfe auch durch kleinste Rutenringe durchgeführt werden kann, ohne das eine dünnere Angelschnureinführhilfe benutzt werden muss.

Für den Fall, dass die Angelschnureinführhilfe eine Rücklaufsperre 120 aufweist, kann der Einfädelvorgang vom Angler in einfacher Weise unterbrochen werden, indem die Angelschnureinführhilfe nach dem teilweisen Hindurchschieben durch einen Rutenring wieder ein Stück weit zurückgezogen wird. Die Zunge 124 der Rücklaufsperre 120 wird beim Hindurchführen durch den Rutenring aufgrund seiner Elastizität an den Korpus 110 herangedrückt, sodass hierdurch keine Querschnittsvergrößerung des Korpus 110 entsteht. Nachdem die Rücklaufsperre 120 durch den Rutenring hindurchgelangt ist, springt die Zunge 124 aufgrund der Materialeigenschaften radial nach außen, sodass die Angelschnureinführhilfe nach einer kurzen Rückwärtsbewegung mit ihrem Schlitz 122 am Rutenring eingehängt werden kann und die Angelschnur 14 in dieser Position an der Angelrute hält. Nun kann der Angler sich anderweitigen Tätigkeiten zuwenden, ohne dass die Angelschnur wieder aus den bereits eingefädelten Rutenringen herausgelangt.

Aufgrund der fluoreszierenden Ausgestaltung der Angelschnureinführhilfe kann diese auch gut bei schlechten Lichtverhältnissen, z. B. in der Dämmerung oder nachts verwendet werden.

## Patentansprüche

1. Angelschnureinführhilfe zum Einfädeln einer Angelschnur (14) in die Rutenringe einer Angelrute mit einem im Wesentlichen länglichen Korpus (10, 110) zum Hindurchführen durch die Rutenringe der Angelrute, wobei im Korpus (10, 110) eine Schnurkerbe (12, 112, 132) zur Aufnahme der Angelschnur (14) eingelassen ist,
**dadurch gekennzeichnet,**
**dass** die Schnurkerbe (12, 112, 312) zur klemmenden Befestigung der Angelschnur (14) sich verjüngend ausgebildet ist, und dass eine an der Schnurkerbe (12, 112, 132) ausgebildete Lippe (16) an ihrem freien Ende außen abgeflacht ausgebildet ist.

2. Angelschnureinführhilfe nach Anspruch 1,
**dadurch gekennzeichnet,**
**dass** die Schnurkerbe (12, 112, 312) in axialer Richtung ausgerichtet ist.

3. Angelschnureinführhilfe nach einem der vorangehenden Ansprüche,
**dadurch gekennzeichnet,**
**dass** von einem Ende der Schnurkerbe (12, 112, 312) ausgehend bis zum Ende des Korpus (10, 110) mindestens eine Rille (18) zur Aufnahme der Angelschnur (14) ausgebildet ist.

4. Angelschnureinführhilfe nach einem der vorangehenden Ansprüche,
**dadurch gekennzeichnet,**
**dass** der Korpus zumindest teilweise gekrümmt ausgebildet ist.

5. Angelschnureinführhilfe nach einem der vorangehenden Ansprüche,
**dadurch gekennzeichnet,**
**dass** am Korpus (110) eine Rücklaufsperre (120, 320) ausgebildet ist.

6. Angelschnureinführhilfe nach Anspruch 5,
**dadurch gekennzeichnet,**
**dass** die Rücklaufsperre (120, 320) einen im Korpus (110) eingelassenen Schlitz (122) umfasst, der in axialer Richtung ausgerichtet ist und der sich zur Schnurkerbe (112, 312) hin öffnet.

7. Angelschnureinführhilfe nach einem der Ansprüche 5 oder 6,
**dadurch gekennzeichnet,**
**dass** eine am Schlitz (122) ausgebildete Zunge (124) zumindest teilweise radial vom Korpus (110) absteht.

8. Angelschnureinführhilfe nach Anspruch 7,
**dadurch gekennzeichnet,**
**dass** die Zunge (124) derart elastisch ausgestaltet ist, dass sich die Zunge (124) unter Krafteinwirkung vollständig in den Korpus (110) einschwenken lässt.

## Claims

1. A fishing line insertion aid for threading a fishing line (14) into the rod rings of a fishing rod, comprising a substantially elongated body (10, 110) for leading through the rod rings of the fishing rod, wherein a line notch (12, 112, 132) is recessed for receiving the fishing line (14),
**characterized in that**
the line notch (12, 112, 132) is formed in a tapering manner for the clamping fastening of the fishing line (14); and **in that** a lip (16) formed on the line notch (12, 112, 312) is formed in an outwardly flattened manner at its free end.

2. A fishing line insertion aid in accordance with claim 1,
**characterized in that**
the line notch (12, 112, 312) is oriented in an axial direction.

3. A fishing line insertion aid in accordance with one of the preceding claims, **characterized in that**,
starting from an end of the line notch (12, 112, 312) up to the end of the body (10, 110), at least one groove (18) is formed for receiving the fishing line (14).

4. A fishing line insertion aid in accordance with one of the preceding claims,
**characterized in that**
the body is formed in a curved manner at least in part.

5. A fishing line insertion aid in accordance with one of the preceding claims, **characterized in that**
a return stop (120, 320) is formed at the body (110).

6. A fishing line insertion aid in accordance with claim 5,
**characterized in that**
the return stop (120, 320) comprises a slit (122) that is recessed in the body (110), that is oriented in the axial direction, and that opens toward the line notch (112, 132).

7. A fishing line insertion aid in accordance with one of the claims 5 or 6,
**characterized in that**
a tongue (124) formed at the slit (122) projects radially from the body (110) at least in part.

8. A fishing line insertion aid in accordance with claim 7,
**characterized in that**
the tongue (124) is configured so resiliently that the tongue (124) can be completely pivoted into the body (110) under the effect of force.

## Revendications

1. Aide à l'introduction d'une ligne de pêche destinée à l'enfilement d'une ligne de pêche (14) dans les anneaux d'une canne à pêche, comprenant un corps (10, 110) sensiblement allongé destiné à être guidé à travers les anneaux de la canne à pêche, une encoche pour ligne (12, 112, 132) destinée à recevoir la ligne de pêche (14) étant ménagée dans le corps (10, 110),
**caractérisée en ce que**
l'encoche pour ligne (12, 112, 312) est réalisée se rétrécissant pour la fixation par pincement de la ligne de pêche (14), et **en ce qu'**une lèvre (16) formée sur l'encoche pour ligne (12, 112, 132) est réalisée aplatie à l'extérieur au niveau de son extrémité libre.

2. Aide à l'introduction d'une ligne de pêche selon la revendication 1,
**caractérisée en ce que**
l'encoche pour ligne (12, 112, 312) est orientée dans la direction axiale.

3. Aide à l'introduction d'une ligne de pêche selon l'une des revendications précédentes,
**caractérisée en ce que**
au moins une rainure (18) destinée à recevoir la ligne de pêche (14) est formée d'une extrémité de l'encoche pour ligne (12, 112, 312) à l'extrémité du corps (10, 110).

4. Aide à l'introduction d'une ligne de pêche selon l'une des revendications précédentes,
**caractérisée en ce que**
le corps est réalisé au moins en partie courbé.

5. Aide à l'introduction d'une ligne de pêche selon l'une des revendications précédentes,
**caractérisée en ce que**
un dispositif de blocage antiretour (120, 320) est formé sur le corps (110).

6. Aide à l'introduction d'une ligne de pêche selon la revendication 5,
**caractérisée en ce que**
le dispositif de blocage antiretour (120, 320) comprend une fente (122) ménagée dans le corps (110), qui est orientée dans la direction axiale et qui s'ouvre en direction de l'encoche pour ligne (112, 312).

7. Aide à l'introduction d'une ligne de pêche selon l'une des revendications 5 ou 6,
**caractérisée en ce que**
une languette (124) formée sur la fente (122) dépasse au moins en partie radialement du corps (110).

8. Aide à l'introduction d'une ligne de pêche selon la revendication 7,
**caractérisée en ce que**
la languette (124) est conçue élastique de telle manière que la languette (124) peut être pivotée entièrement dans le corps (110) sous l'effet d'une force.
